# EUROPÄISCHE PATENTSCHRIFT

(11) **EP 3 233 934 B1**
(45) Veröffentlichungstag und Bekanntmachung des Hinweises auf die Patenterteilung: **20.10.2021**
(21) Anmeldenummer: 15817805.3
(22) Anmeldetag: 18.12.2015
(51) Int. Cl.: C08F 4/10, C04B 26/04, C04B 26/06, C04B 26/08, C04B 14/06, C08F 4/40, C08F 4/50, C09J 4/06, C09J 133/00, C09J 167/07, C09J 175/14

(54) **REAKTIONSHARZ-ZUSAMMENSETZUNG UND DEREN VERWENDUNG**
REACTION RESIN COMPOSITION AND ITS USE
COMPOSITION DE RÉSINE RÉACTIVE ET SON UTILISATION

(30) Priorität: 19.12.2014 EP 14199157
(43) Veröffentlichungstag der Anmeldung: 25.10.2017
(73) Patentinhaber: Hilti Aktiengesellschaft, 9494 Schaan (LI)
(72) Erfinder: PFEIL, Armin, 86916 Kaufering (DE)
(74) Vertreter: Hilti Aktiengesellschaft Corporate Intellectual Property
(86) Internationale Anmeldenummer: PCT/EP2015/080447
(87) Internationale Veröffentlichungsnummer: WO 2016/097269

(56) Entgegenhaltungen:
- EP-A1- 2 824 155
- JP-A- 2010 126 563

## Beschreibung

Die vorliegende Erfindung betrifft eine radikalisch härtbare Reaktionsharz-Zusammensetzung mit einem Harzbestandteil und einem Initiatorsystem, das einen Initiator und ein Katalysatorsystem, welches in der Lage ist, *in-situ* einen Übergangsmetallkomplex als Katalysator zu bilden, umfasst, sowie die Verwendung der Zusammensetzung zu baulichen Zwecken, insbesondere zur Verankerung von Verankerungselementen in Bohrlöchern.

Die Verwendung von Reaktionsharz-Zusammensetzungen auf der Basis von ungesättigten Polyesterharzen, Vinylesterharzen oder von Epoxidharzen als Klebe- und Haftmittel, ist seit langem bekannt. Es handelt sich dabei um Zweikomponentensysteme, wobei eine Komponente die Harzmischung und die andere Komponente das Härtungsmittel enthält. Andere, übliche Bestandteile wie Füllmittel, Beschleuniger, Stabilisatoren, Lösungsmittel einschließlich Reaktivlösungsmittel (Reaktivverdünner) können in der einen und/oder der anderen Komponente enthalten sein. Durch Vermischen der beiden Komponenten wird dann die Reaktion unter Bildung eines gehärteten Produktes in Gang gebracht.

Die Mörtelmassen, welche in der chemischen Befestigungstechnik Verwendung finden sollen, sind komplexe Systeme, an die besondere Anforderungen gestellt werden, wie beispielsweise die Viskosität der Mörtelmasse, die Aushärtung und Durchhärtung in einem relativ breiten Temperaturbereich, gewöhnlich -10°C bis +40°C, die Eigenfestigkeit der ausgehärteten Masse, Haftung auf unterschiedlichen Untergründen und Umgebungsbedingungen, Lastwerte, Kriechfestigkeit und dergleichen.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis.

Organische, härtbare zweikomponentige Reaktionsharz-Zusammensetzungen auf der Grundlage von härtbaren Epoxidharzen und Aminhärtern werden als Klebstoffe, Spachtelmassen zur Rissverfüllung und unter anderem zur Befestigung von Konstruktionselementen, wie Ankerstangen, Betoneisen (Bewehrungseisen), Schrauben und dergleichen, in Bohrlöchern verwendet. Derartige Mörtelmassen sind beispielsweise aus der EP 1 475 412 A2, der DE 198 32 669 A1 und der DE 10 2004 008 464 A1 bekannt.

Ein Nachteil der bekannten Mörtelmassen auf Epoxidbasis liegt im Einsatz von oft erheblichen Mengen an ätzenden Aminen als Härter, wie Xylylendiamin (XDA), insbesondere das m-Xylylendiamin (mXDA; 1,3-Benzoldimethanamin), und/oder an aromatischen Alkoholverbindungen, wie freie Phenole, z.B. Bisphenol A, was ein Gesundheitsrisiko für den Anwender bedeuten kann. Diese Verbindungen sind in zum Teil recht erheblichen Mengen, d.h. bis zu 50% in den jeweiligen Komponenten von Mehrkomponenten-Mörtelmassen enthalten, so dass vielfach eine Kennzeichnungspflicht der Verpackung besteht, die zu einer geringeren Anwenderakzeptanz des Produkts führt. In den letzten Jahren wurden in einigen Ländern Grenzwerte eingeführt, bis zu welchem Gehalt beispielsweise mXDA oder Bisphenol A in den Produkten enthalten sein dürfen bzw. dann gekennzeichnet werden müssen oder überhaupt noch in Produkten enthalten sein dürfen.

Radikalisch härtbare Systeme, insbesondere bei Raumtemperatur härtbare Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Anmeldung DE 3226602 A1 beschriebene Härterzusammensetzung, umfassend Benzoylperoxid als Radikalstarter und eine aminischen Verbindung als Beschleuniger, und die in der Anmeldung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Harz und Härter robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden müssen. Diese sind thermisch sensibel und reagieren sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilitäten und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser, zugegeben. Diese wirken als Weichmacher und beeinträchtigen damit signifikant die mechanische Stärke der Harzmischungen.

Ferner sind diese bekannten Härterzusammensetzungen insofern nachteilig, als sie erhebliche Peroxidmengen enthalten müssen, was problematisch ist, weil peroxidhaltige Produkte ab einer Konzentration von 1 %, etwa für Dibenzoylperoxid, in einigen Ländern als sensibilisierend gekennzeichnet werden müssen. Ähnliches gilt auch für die aminischen Beschleuniger, die zum Teil ebenfalls kennzeichnungspflichtig sind.

Bisher sind nur wenige Versuche unternommen worden, peroxidfreie Systeme auf Basis radikalisch polymerisierbarer Verbindungen zu entwickeln. Aus der DE 10 2011 078 785 A1 ist eine peroxidfreie Härterzusammensetzung für radikalisch polymerisierbare Verbindungen bekannt, die eine 1,3-Dicarbonylverbindung als Härter und eine Manganverbindung als Beschleuniger enthält sowie deren Verwendung für Reaktionsharz-Zusammensetzungen auf Basis radikalisch härtbarer Verbindungen. Dieses System neigt jedoch dazu, unter bestimmten Bedingungen nicht ausreichend durchzuhärten, was zu einer verminderten Leistungsfähigkeit der ausgehärteten Masse insbesondere für die Anwendung als Dübelmasse führen kann, so dass hier zwar eine Anwendung für Dübelmassen im Allgemeinen möglich ist, jedoch nicht für solche Anwendungen, bei denen zuverlässig recht hohe Lastwerte erforderlich sind.

Bei den beiden beschriebenen Systemen ist ferner nachteilig, dass jeweils ein definiertes Verhältnis von Harzkomponente und Härterkomponente (im Folgenden auch kurz als Mischungsverhältnis bezeichnet) eingehalten werden muss, damit die Bindemittel vollständig aushärten und die geforderten Eigenschaften der ausgehärteten Massen erreichen können. Viele der bekannten Systeme sind wenig robust, was das Mischungsverhältnis anbelangt und reagieren teilweise recht empfindlich auf Mischungsschwankungen, was sich in den Eigenschaften der ausgehärteten Massen niederschlägt.

Eine andere Möglichkeit, eine radikalische Polymerisation ohne den Einsatz von Peroxiden zu initiieren, liefert das in der makromolekularen Synthesechemie häufig eingesetzte ATRP-Verfahren (= Atom Transfer Radical Polymerisation). Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenisch ungesättigte Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Diese Reaktionsführung wird beispielsweise von J.S. Wang, et al., J. Am. Chem. Soc., vol. 117, p. 5614-5615 (1995), von Matyjaszewski, Macromolecules, vol. 28, p. 7901-7910 (1995) beschrieben. Darüber hinaus offenbaren die Veröffentlichungen WO 96/30421 A1, WO 97/47661 A1, WO 97/18247 A1, WO 98/40415 A1 und WO 99/10387 A1 Varianten der zuvor erläuterten ATRP.

Die ATRP war lange von wissenschaftlichem Interesse und wird im Wesentlichen dazu eingesetzt, die Eigenschaften von Polymeren gezielt zu steuern und an die gewünschten Anwendungen anzupassen. Hierzu zählen die Kontrolle der Teilchengröße, der Struktur, der Länge, des Gewichts und der Gewichtsverteilung von Polymeren. Dementsprechend kann der Aufbau des Polymers, das Molekulargewicht und die Molekulargewichtsverteilung gesteuert werden. Die ATRP erlangt dadurch zunehmend auch wirtschaftliches Interesse. So beschreiben die U.S. Patente Nr. 5,807,937 und 5,763,548 (Co)polymere, die mittels ATRP hergestellt wurden und die für eine Vielzahl an Anwendungen nützlich sind, wie Dispergiermittel und grenzflächenaktive Substanzen.

Bisher wurde das ATRP-Verfahren allerdings nicht dazu eingesetzt, eine Polymerisation vor Ort, etwa auf der Baustelle unter den dort herrschenden Bedingungen durchzuführen, wie es für bauliche Anwendung, z.B. Mörtel-, Klebe- und Dübelmassen erforderlich ist. Die Anforderungen, welche bei diesen Anwendungen an die polymerisierbaren Zusammensetzungen gestellt werden, nämlich Initiierung der Polymerisation im Temperaturbereich zwischen -10°C und +60°C, anorganisch gefüllte Zusammensetzungen, Einstellung einer Gelzeit mit anschließender schneller und möglichst vollständiger Polymerisation des Harzbestandteils, die Konfektionierung als Ein- oder Mehrkomponentensysteme und die sonstigen bekannten Anforderungen an die ausgehärtete Masse, werden bisher in der umfangreichen Literatur zur ATRP nicht berücksichtigt.

Der Erfindung liegt daher die Aufgabe zugrunde, eine Reaktionsharz-Zusammensetzung für Mörtelsysteme der eingangs beschriebenen Art bereitzustellen, welches die genannten Nachteile der bekannten Systeme nicht aufweist, welche insbesondere als Zweikomponentensystem konfektioniert werden kann, über Monate hinweg lagerstabil ist und bei den für Reaktionsharzmörtel üblichen Anwendungstemperaturen, d.h. zwischen -10°C und +60°C, insbesondere zwischen -5°C und +40°C zuverlässig aushärtet, d.h. kalthärtend ist.

Der Erfinder hat überraschend herausgefunden, dass die Aufgabe gelöst werden kann, indem für die oben beschriebenen Reaktionsharz-Zusammensetzungen auf Basis radikalisch polymerisierbarer Verbindungen ein Initiatorsystem auf Basis eines Halogencarbonsäureesters als Radikalinitiator mit Cu(0) oder anorganischen Cu(I)-Verbindungen zusammen mit einem Stickstoff-enthaltenden Liganden als Katalysatorsystem verwendet wird.

Zum besseren Verständnis der Erfindung werden zunächst die folgenden Erläuterungen der hierin verwendeten Terminologie als sinnvoll erachtet. Im Sinne der Erfindung bedeutet:
- *"kalthärtend",* dass die Polymerisation, hierin auch gleichbedeutend als *"Härtung"* bezeichnet, der härtbaren Verbindungen bei Raumtemperatur ohne zusätzlichen Energieeintrag, etwa durch Wärmezufuhr, durch die in den Reaktionsharz-Zusammensetzungen enthaltenen Härtungsmitteln, gegebenenfalls in Anwesenheit von Beschleunigern, gestartet werden kann und auch eine für die geplanten Anwendungszwecke ausreichende Durchhärtung zeigen;
- *"reaktionsinhibierend getrennt",* dass eine Trennung zwischen Verbindungen bzw. Komponenten derart erreicht wird, dass eine Reaktion untereinander erst erfolgen kann, wenn die Verbindungen bzw. Komponenten etwa durch Mischen miteinander in Kontakt gebracht werden; eine reaktionsinhibierende Trennung ist auch durch eine (Mikro)verkapselung einer oder mehrerer Verbindungen bzw. Komponenten denkbar;
- *"Härtungsmittel"* Stoffe, welche die Polymerisation (das Härten) des Grundharzes bewirken;
- *"aliphatische Verbindung"* eine acyclische und cyclische, gesättigte oder ungesättigte Kohlenwasserstoffverbindung, die nicht aromatisch ist (PAC, 1995, 67, 1307; Glossary of class names of organic compounds and reactivity intermediates based on structure (IUPAC Recommendations 1995));
- *"Beschleuniger"* eine zur Beschleunigung der Polymerisationsreaktion (Härtung) fähige Verbindung, die dazu dient, die Bildung des Radikalstarters zu beschleunigen;
- *"Polymerisationsinhibitor",* hierin gleichbedeutend auch als *"Inhibitor"* bezeichnet, eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden (oftmals als Stabilisator bezeichnet) und die dazu dient, den Start der Polymerisationsreaktion unmittelbar nach der Zugabe des Härtungsmittels zu verzögern; um den Zweck der Lagerstabilität zu erreichen, wird der Inhibitor üblicherweise in so geringen Mengen eingesetzt, dass der Start der Polymerisationsreaktion nicht beeinflusst wird; um den Zeitpunkt des Starts der Polymerisationsreaktion zu beeinflussen, wird der Inhibitor üblicherweise in solchen Mengen eingesetzt, dass die Gelzeit beeinflusst wird;
- *"Reaktivverdünner"* flüssige oder niedrigviskose Monomere und Grundharze, welche andere Grundharze oder den Harzbestandteil verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinylester-Harze, die gewöhnlich mit Peroxiden gehärtet werden, entspricht die Zeit der Härtungsphase des Harzes der Gelzeit, in der sich die Temperatur des Harzes von +25°C auf +35°C erhöht; dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Zweikomponentensystem"* ein System, das zwei voneinander getrennt gelagerte Komponenten, im Allgemeinen eine Harz- und eine Härterkomponente, umfasst, so dass eine Härtung der Harzkomponente erst nach dem Mischen der beiden Komponenten erfolgt;
- *"Mehrkomponentensystem"* ein System, das drei oder mehrere voneinander getrennt gelagerte Komponenten umfasst, so dass eine Härtung der Harzkomponente erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen umfasst sein sollen.

Der Erfinder hat herausgefunden, dass sich unter den für bauliche Anwendungen vorherrschenden Reaktionsbedingungen radikalisch polymerisierbare Verbindungen mit einer Kombination aus bestimmten Verbindungen, wie sie für die Initiierung der ATRP Verwendung finden, polymerisieren lassen. Damit ist es möglich, eine Reaktionsharz-Zusammensetzung bereitzustellen, die frei von Peroxiden ist, die kalthärtend ist, die die an Reaktionsharz-Zusammensetzungen für die Verwendung als Mörtel-, Klebe- oder Dübelmassen gestellten Anforderungen erfüllt und die insbesondere als Zwei- oder Mehrkomponentensystem konfektioniert, lagerstabil ist.

Überraschend hat sich herausgestellt, dass bei Verwendung eines Katalysatorsystems, das wenigstens einen Stickstoff-enthaltenden Liganden und Cu(0) oder eine anorganische Cu(I)-Verbindung umfasst, in Abwesenheit eines Reduktionsmittels eine Polymerisation eines radikalisch härtbaren Harzes ausgelöst werden kann.

Ein erster Gegenstand der Erfindung ist daher eine Reaktionsharz-Zusammensetzung mit einem Harzbestandteil, der eine radikalisch polymerisierbare Verbindung enthält, und einem Initiatorsystem, das einen α-Halogencarbonsäureester und ein Katalysatorsystem enthält, wobei das Katalysatorsystem wenigstens einen Stickstoff-enthaltenden Liganden und Cu(0) oder eine anorganische Cu(I)-Verbindung umfasst.

Damit können Reaktionsharz-Zusammensetzungen bereitgestellt werden, die frei von Peroxiden und kritischen Aminverbindungen und somit nicht mehr kennzeichnungspflichtig sind. Des Weiteren enthalten die Zusammensetzungen keine in der ausgehärteten Masse als Weichmacher fungierenden Phlegmatisierungsmittel mehr. Ein weiterer Vorteil der Erfindung liegt darin, dass die Zusammensetzung, wenn sie als Zweikomponenten-System konfektioniert wird, ein beliebiges Verhältnis der beiden Komponenten zueinander zulässt, wobei der Initiator und gegebenenfalls der Beschleuniger homogen gelöst in den Komponenten und das Cu(0) oder die anorganische Cu(I)-Verbindung homogen dispers verteilt vorliegt, so dass auch nur eine niedrige Konzentration davon erforderlich ist.

Das Initiatorsystem umfasst erfindungsgemäß einen Initiator und ein Katalysatorsystem.

Der Initiator ist zweckmäßig eine Verbindung, die über eine Halogen-Kohlenstoff-Bindung verfügt, die durch eine katalysierte homolytische Spaltung C-Radikale liefert, die eine radikalische Polymerisation starten können. Damit eine ausreichend lange Lebensdauer des Radikals gewährleistet ist, muss der Initiator über Substituenten verfügen, die das Radikal stabilisieren können wie z.B. Carbonyl-Substituenten. Einen weiteren Einfluss auf die Initiierung übt das Halogenatom aus.

Das aus dem Initiator gebildete Primärradikal weist bevorzugt eine ähnliche Struktur auf wie das Radikalzentrum der wachsenden Polymerkette. Wenn es sich also bei den Reaktionsharz-Zusammensetzungen um Methacrylatharze oder Acrylatharze handelt, sind α-Halogencarbonsäureester der Isobutansäure oder der Propansäure besonders geeignet. Im Einzelfall sollte aber die besondere Eignung immer durch Versuche ermittelt werden.

Für die Anwendung der Reaktionsharz-Zusammensetzung als bauliche Klebe-, Mörtel- oder Dübelmasse insbesondere für mineralische Untergründe hat sich eine Verbindungsklasse als besonders geeignet erwiesen. Dementsprechend ist erfindungsgemäß der Initiator ein α-Halogencarbonsäureester der allgemeinen Formel (I) 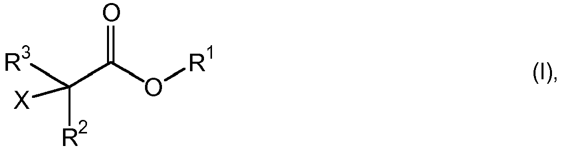 in der
- X: Chlor, Brom oder Iod, bevorzugt Chlor oder Brom, besonders bevorzugt Brom bedeutet;
- R¹: für eine geradkettige oder verzweigte, gegebenenfalls substituierte C₁-C₂₀-Alkylgruppe, bevorzugt C₁-C₁-Alkylgruppe, oder eine Arylgruppe steht; oder für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
- R²: und R³ unabhängig voneinander für Wasserstoff, eine C₁-C₂₀-Alkylgruppe, bevorzugt C₁-C₁₀-Alkylgruppe und stärker bevorzugt C₁-C₆-Alkylgruppe, oder eine C₃-C₈-Cycloalkylgruppe, C₂-C₂₀-Alkenyl- oder -Alkinylgruppe, bevorzugt C₂-C₆-Alkenylgruppe oder -Alkinylgruppe, Oxiranylgruppe, Glycidylgruppe, Arylgruppe, Heterocyclylgruppe, Aralkylgruppe, Aralkenylgruppe (aryl-substituierte Alkenylgruppen) stehen.

Derartige Verbindung sowie deren Herstellung sind dem Fachmann bekannt. In dieser Hinsicht wird Bezug genommen auf die Veröffentlichungen WO 96/30421 A1 und WO 00/43344 A1, deren Inhalt hiermit in diese Anmeldung aufgenommen wird.

Geeignete Initiatoren umfassen beispielsweise C₁-C₆-Alkylester einer α-Halo-C₁-C₆-Carbonsäure, wie α-Chlorpropionsäure, α-Brompropionsäure, α-Chlor-*iso*-butansäure, α-Brom-*iso*-butansäure und dergleichen

Bevorzugt sind Ester der α-Brom-*iso*-butansäure. Beispiele geeigneter α-Brom-*iso*butansäureester sind: Bis[2-(2'-brom-*iso*-butyryloxy)ethyl]disulfid, Bis[2-(2-brom-*iso-*butyryloxy)undecyl]disulfid, α-Brom-*iso*-butyrylbromid, 2-(2-Brom-*iso-*butyryloxy)ethylmethacrylate, *tert*-Butyl-α-brom-*iso*-butyrat, 3-Butynyl-2-brom-*iso-*butyrat, Dipentaerythritolhexakis(2-brom-*iso*-butyrat), Dodecyl-2-brom-*iso*-butyrat, Ethyl-α-brom-*iso*-butyrat, Ethylenbis(2-brom-*iso*-butyrat), 2-Hydroxyethyl-2-brom-*iso*-butyrat, Methyl-α-brom-*iso*-butyrat, Octadecyl-2-brom-*iso*-butyrat, Pentaerythritoltetrakis(2-brom-*iso*-butyrat), Poly(ethylenglykol)bis(2-brom-*iso*-butyrate), Poly(ethylenglykol)methylether-2-brom-*iso-*butyrate, 1,1,1-Tris(2-brom-*iso*-butyryloxymethyl)ethan, 10-Undecenyl 2-brom-*iso*-butyrat.

Das Katalysatorsystem besteht erfindungsgemäß aus mindestens einem Stickstoff-enthaltenden Liganden und Cu(0) oder einer anorganischen Cu(I)-Verbindung.

Der Ligand trägt zweckmäßig zur Aktivierung des Kupfersalzes in der zu verwendenden radikalisch polymerisierbaren Verbindung bei, da das Cu(0) oder die anorganische Cu(I)-Verbindung selbst nicht löslich ist.

Damit von dem Initiator Radikale abgespalten werden können, welche die Polymerisation der radikalisch polymerisierbaren Verbindungen initiieren, ist eine Verbindung erforderlich, welche die Abspaltung ermöglicht bzw. steuert, insbesondere beschleunigt. Mit einer geeigneten Verbindung wird es möglich, eine bei Raumtemperatur härtende Reaktionsharzmischung bereitzustellen.

Zweckmäßig ist diese Verbindung ein geeigneter Übergangsmetallkomplex, der die Bindung zwischen dem α-Kohlenstoffatom und dem daran angebundenen Halogenatom des Initiators homolytisch zu spalten vermag. Ferner muss der Übergangsmetallkomplex fähig sein, an einem reversiblen Redoxzyklus mit dem Initiator, einem schlafenden Polymerkettenende, einem wachsenden Polymerkettenende oder einer Mischung davon teilzunehmen.

Erfindungsgemäß wird diese Verbindung aus elementarem Kupfer (Cu(0)) oder einer anorganische Cu(I)-Verbindung und einem Stickstoff-enthaltenden Liganden bereitgestellt.

Das elementare Kupfer (Cu(0)) kann in einer oder mehreren physikalischen Formen vorliegen. Zum Beispiel kann das elementare Kupfer als Fäden, als Draht, als Netz, als Platte, als Späne, als Pulver, als dünnes Gewebe (Flor), als Sinter, als Filter, als Band, als Rohr, als Pellets, als Kristalle, als Beschichtung auf nicht kupferhaltigen und damit nicht reaktiven Materialien oder in einer anderen festen Form vorliegen. Um eine ausreichend hohe Reaktivität zu haben, sollte die spezifische Oberfläche des elementaren Kupfers hinreichend groß sein, wobei die Reaktivität auch von der physikalischen Form abhängt, in der das Kupfer eingesetzt wird. Die Oberfläche kann durch bekannte Methoden entsprechend bearbeitet werden, um die erforderliche Reaktivität zu erhalten.

Geeignete anorganische Cu(I)-Verbindungen sind Cu(I)-Verbindungen der Elemente der 6. Hauptgruppe des Periodensystems, Cu₂X, mit X = O, S, Se oder Te, wobei sich hinsichtlich der Gelzeit der Zusammensetzung folgende Reaktivitäts-Reihenfolge ergibt: Cu₂Te > Cu₂Se > Cu₂O > Cu₂S. Damit kann eine geeignete Cu(I)-Verbindung im Hinblick auf die gewünschte einzustellende Gelzeit ausgewählt werden. Geeignete Liganden, insbesondere neutrale Liganden sind aus der Komplexchemie der Übergangsmetalle bekannt. Sie sind mit dem Koordinationszentrum unter Ausprägung von verschiedenen Bindungstypen koordiniert, z.B. σ-, n-, µ-, η-Bindungen. Durch die Wahl des Liganden lässt sich die Reaktivität des Kupfer(I)komplexes gegenüber dem Initiator einstellen.

Erfindungsgemäß ist der Ligand ein Stickstoff-enthaltender Ligand. Zweckmäßig ist der Ligand ein Stickstoff-enthaltender Ligand, der ein, zwei oder mehr Stickstoffatome enthält, wie etwa mono-, bi- oder tridentate Liganden.

Geeignete Liganden sind Aminoverbindungen mit primären, sekundären und/oder tertiären Aminogruppen, wovon solche mit ausschließlich tertiären Aminogruppen bevorzugt sind, oder Aminoverbindungen mit heterocyclischen Stickstoffatomen.

Beispiele geeigneter Aminoverbindungen sind: Ethylendiaminotetraacetat (EDTA), N,N-Dimethyl-N',N'-bis(2-dimethylaminoethyl)ethylendiamin (Me6TREN), N,N'-Dimethyl-1,2-phenyldiamin, 2-(Methylamino)phenol, 3-(Methylamino)-2-butanol, N,N'-Bis(1,1-dimethylethyl)-1,2-ethandiamin oder N,N,N',N",N"-Pentamethyldiethylentriamin (PMDETA), und mono-, bi- oder tridentate heterocyclische Elektronen-Donor-Liganden, wie solche, die von unsubstituierten oder substituierten Heteroarenen abgeleitet sind, wie Furan, Thiophen, Pyrrol, Pyridin, Bipyridin, Picolylimin, γ-Pyran, γ-Thiopyran, Phenanthrolin, Pyrimidin, bis-Pyrimidin, Pyrazin, Indol, Coumarin, Thionaphthen, Carbazole, Dibenzofuran, Dibenzothiophen, Pyrazol, Imidazol, Benzimidazol, Oxazol, Thiazol, Bis-Thiazol, Isoxazol, Isothiazol, Chinolin, Bichinolin, Isochinolin, Biisochinolin, Acridin, Chroman, Phenazine, Phenoxazine, Phenothiazine, Triazine, Thianthren, Purin, Bismidazol und Bisoxazol.

Darunter ist 2,2'-Bipyridin, N-Butyl-2-pyridylmethanimine, 4,4'-Di-*tert*-butyl-2,2'-dipyridin, 4,4'-Dimethyl-2,2'-dipyridin, 4,4'-Dinonyl-2,2'-dipyridin, N-Dodecyl-N-(2-pyridylmethylen)amin, 1,1,4,7,10,10-Hexamtehyltriethylentetramin, N-Octadecyl-N-(2-pyridylmethylen)amin, N-Octyl-2-pyridylmethanimin, N,N,N',N'-Tetramethylethylendiamin N,N,N',N",N"-Pentamethyldiethylentriamine, 1,4,8,11-Tetracyclotetradecan, N,N,N',N'-Tetrakis(2-pyridylmethyl)ethylendiamin, 1,4,8,11-Tetramethyl-1,4,8,11-tetraazacyclotetradecan, Tris[2-(diethylamino)ethyl]amin oder Tris(2-methylpyridyl)amin bevorzugt, wobei Tris-(Dimethylaminoethyl)amin (TDMAEA), 1,1,4,7,10,10-Hexamtehyltriethylentetramin, N,N,N',N",N"-Pentamethydiethyltriamin (PMDETA), 2,2'-Bipyridin (bipy) oder N,N,N',N'-Tetramethylethylendiamin bevorzugt sind.

Weitere geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin (Neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan (IPD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin), 2-Methylpentandiamin (DYTEK A®), N-Ethylaminopiperazin (N-EAP), 1,3-Bisaminomethylcyclohexan (1,3-BAC), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(amino-methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

Das Amin kann entweder alleine oder als Gemisch aus zweien oder mehreren davon eingesetzt werden.

In einer weiteren Ausführungsform enthält die Reaktionsharz-Zusammensetzung ferner einen Beschleuniger. Dadurch wird das System reaktiver und die Polymerisation kann beschleunigt werden. Insbesondere bei der Verwendung von Cu(0) als Katalysator ist eine deutliche Verbesserung der Reaktivität zu verzeichnen, wenn ein Beschleuniger zu der Reaktionsharz-Zusammensetzung gegeben wird. Darüber hinaus wurde gefunden, dass die Menge an Beschleuniger einen wesentlichen Einfluss auf die Reaktivität hat, wobei bereits geringe Mengen von unter 1 Gew.-% ausreichen, um eine deutliche Beschleunigung der Polymerisation zu erreichen.

Geeignete Beschleuniger sind Phenol oder Phenolderivate, wie 1,2-Dihydroxybenzol (Brenzcatechin), 1,3-Dihydroxybenzol (Resorcin), 1,4-Dihydroxybenzol (Hydrochinon), 1,2,3-Trihydroxybenzol (Pyrrogallol), 1,2,4-Trihydroxybenzol (Hydroxyhydrochinon), 1,3,5-Trihydroxybenzol (Phloroglucin), Methylhydrochinon und dergleichen wobei diese phenolischen Grundkörper beliebig substituiert und/oder kondensiert sein können, die einzeln oder in Kombination verwendet werden können.

Als radikalisch polymerisierbare Verbindungen sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Veröffentlichungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Veröffentlichungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglykolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit erfindungsgemäßen Initiatorsystem polymerisiert werden können, enthalten, zum Beispiel reaktive Gruppen, die von der Itaconsäure, Citraconsäure und allylischen Gruppen und dergleichen abgeleitet sind.

In einer bevorzugten Ausführungsform der Erfindung enthält die Reaktionsharz-Zusammensetzung weitere niederviskose, radikalisch polymerisierbare Verbindungen als Reaktivverdünner für die radikalisch polymerisierbare Verbindung, um deren Viskosität falls erforderlich, anzupassen.

Geeignete Reaktivverdünner sind in den Veröffentlichungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1,0.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer weiteren Ausführungsform der Erfindung enthält die Reaktionsharz-Zusammensetzung ferner einen Inhibitor.

Als Inhibitor sowohl für die Lagerstabilität der radikalisch polymerisierbaren Verbindung und damit auch des Harzbestandteils als auch zur Einstellung der Gelzeit sind die für radikalisch polymerisierbare Verbindungen üblicherweise als Inhibitoren verwendeten stabilen Radikale, wie *N*-Oxyl-Radikale geeignet, wie sie dem Fachmann bekannt sind. Phenolische Inhibitoren, wie sie sonst üblicherweise in radikalisch härtbaren Harzzusammensetzungen Verwendung finden, können hier nicht verwendet werden, da die Inhibitoren als Reduktionsmittel mit dem Kupfer(II)salz reagieren würden, was sich nachteilig auf die Lagerstabilität und die Gelzeit auswirken würde.

Als *N*-Oxyl-Radikale können beispielsweise solche verwendet werden, wie sie in der DE 199 56 509 A1 beschrieben sind. Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, oder Indolin- Nitroxidradikale, wie 2,3-Dihydro-2,2-diphenyl-3-(phenylimino)-1H-indol-1-oxylnitroxid, oder β-phosphorylierte Nitroxidradikale, wie 1-(Diethoxyphosphinyl)-2,2-dimethylpropyl-1,1-dimethylmethyl-nitroxid, und dergleichen.

Die Reaktionsharz-Zusammensetzung kann ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Denkbare Additive sind Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Veröffentlichungen WO 02/079341 A1 und WO 02/079293 A1 sowie WO 2011/128061 A1, deren Inhalt hiermit in diese Anmeldung aufgenommen wird.

Um ein lagerstabiles System bereitzustellen ist es erforderlich, das Cu(0) oder die anorganische Cu(I)-Verbindung und den Stickstoff-enthaltenden Liganden sowie ggf. den Initiator reaktionsinhibierend voneinander zu trennen. Dies geschieht gewöhnlich dadurch, dass das Cu(0) oder die anorganische Cu(I)-Verbindung in einer ersten Komponente und der Ligand und ggf. der Initiator in einer von der ersten Komponenten getrennten zweiten Komponente gelagert wird.

Dementsprechend ist ein weiterer Gegenstand der Erfindung ein Zwei- oder Mehrkomponenten-System, welches die beschriebene Reaktionsharz-Zusammensetzung enthält.

In einer Ausführungsform der Erfindung werden die Bestandteile der Reaktionsharz-Zusammensetzung räumlich so angeordnet, dass das Cu(0) oder die anorganische Cu(I)-Verbindung und der Stickstoff-enthaltende Ligand sowie der Initiator getrennt voneinander vorliegen, d.h. in jeweils einer getrennt voneinander angeordneten Komponente. Damit wird verhindert, dass die Bildung der reaktiven Spezies, nämlich des reaktiven Kupfer-Komplexes und damit die Polymerisation der radikalisch polymerisierbaren Verbindung bereits bei der Lagerung einsetzt.

Ferner ist bevorzugt, auch den Initiator vom Cu(0) oder der anorganischen Cu(I)-Verbindung zu trennen, da nicht ausgeschlossen werden kann, dass eine schleichende Initiierung verursacht werden könnte. Dies würde zu einer vorzeitigen zumindest teilweisen Polymerisierung (Gelierung) der radikalisch polymerisierbaren Verbindung und damit zu einer verminderten Lagerstabilität führen. Des Weiteren hätte dies einen negativen Einfluss auf die voreingestellte Gelzeit der Zusammensetzung, was sich in einer Gelzeitdrift äußern würde.

Der Initiator kann dabei zusammen mit dem Stickstoff-enthaltenden Liganden in einer Komponente, wie bei einem Zweikomponenten-System, oder als eigenständige Komponente, wie bei einem Dreikomponenten-System, gelagert sein.

Eine bevorzugte Ausführungsform betrifft ein Zweikomponenten-System, welches eine Reaktionsharz-Zusammensetzung enthält, die eine radikalisch polymerisierbare Verbindung, einen α-Halogencarbonsäureester, einen Stickstoff-enthaltenden Liganden, Cu(0) oder eine anorganische Cu(I)-Verbindung, einen Beschleuniger, einen Inhibitor, gegebenenfalls mindestens einen Reaktivverdünner und gegebenenfalls anorganische Zuschlagstoffe umfasst. Dabei sind in einer ersten Komponente, der A-Komponente, das Cu(0) oder die anorganische Cu(I)-Verbindung, der Beschleuniger und der Inhibitor und in einer zweiten Komponente, der B-Komponente, der α-Halogencarbonsäureester und der Stickstoff-enthaltende Ligand enthalten, wobei die beiden Komponenten getrennt voneinander gelagert sind, um eine Reaktion der Bestandteile untereinander vor deren Vermischen zu verhindern. Die radikalisch polymerisierbare Verbindung, der Reaktivverdünner sowie die anorganischen Zuschlagstoffe sind auf die A- und B-Komponente verteilt.

Die Reaktionsharz-Zusammensetzung kann in einer Patrone, einem Gebinde, einer Kapsel oder einem Folienbeutel, welcher zwei oder mehrere Kammern umfasst, die voneinander getrennt sind und in denen das Cu(0) bzw. die anorganische Cu(I)-Verbindung und der Stickstoff-enthaltende Ligand reaktionsinhibierend getrennt voneinander enthalten sind, enthalten sein.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der Erfindung ist die Verwendung der Reaktionsharz-Zusammensetzung als Bindemittel, insbesondere zur Befestigung von Verankerungsmitteln in Bohrlöchern verschiedenen Untergrunds und zum baulichen Kleben.

Die vorliegende Erfindung betrifft auch die Verwendung der oben definierten Reaktionsharzmörtel-Zusammensetzung für Bauzwecke, umfassend das Aushärten der Zusammensetzung durch Mischen des Cu(0) oder der anorganischen Cu(I)-Verbindung mit dem Stickstoff-enthaltenden Liganden und dem Initiator.

Stärker bevorzugt wird die erfindungsgemäße Reaktionsharzmörtel-Zusammensetzung zum Befestigen von Gewindeankerstangen, Bewehrungseisen, Gewindehülsen und Schrauben in Bohrlöchern in verschiedenen Untergründen verwendet, umfassend: Mischen des Cu(0) oder der anorganischen Cu(I)-Verbindung mit dem Stickstoff-enthaltenden Liganden und dem Initiator, Einbringen der Mischung in das Bohrloch, Einführen der Gewindeankerstangen, der Bewehrungseisen, der Gewindehülsen und der Schrauben in die Mischung in dem Bohrloch und Aushärten der Mischung.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### AUSFÜHRUNGSBEISPIELE

Zur Herstellung der nachfolgenden Beispielformulierungen wurden folgende Bestandteile verwendet.

| **Abkürzung** | **Bezeichnung** |
|---|---|
| UMA-1 | Urethanmethacrylat-Präpolymer MW ca 1000 g/mol, 33 Gew.-% in einer 1:1 (Gew:Gew) Mischung aus HPMA und 1,4-BDDMA gelöst (Hydroxypropylmethacrylat, 1,4-Butandioldimethacrylat) |
| Cu-pulver | Kupferpulver, Partikelgröße < 75 µm |
| Cu₂O | Kupfer(I)oxid, Partikelgröße < 5 µm |
| MeHQ | Methylhydrochinon |
| Tempol | 4-Hydroxy-2,2,6,6-tetramethylpiperidin-1-oxyl |
| TS-720 | pyrogene Kieselsäure Cab-O-Sil TS-720 |
| F32 | Quarzsand F31 |
| W12 | Quarzmehl Millisil W12 |
| bipy | 2,2' -Bipyridyl |
| TMEDA | N,N,N',N'-Tetramethylethylendiamin |
| HMTETA | 1,1,4,7,10,10-Hexamethyltriethylentetramin |
| TDMAEA | Tris-(Dimethylaminoethyl)amin |
| PMDETA | N,N,N', N", N"-Pentamethyldiethylentriamin |
| BiBEE | α-Bromo-iso-Buttersäureethylester |

### Herstellung der Zusammensetzungen

Es werden anorganisch gefüllte Zweikomponenten-Systeme mit den in den Tabellen 1 bis 5 gezeigten Zusammensetzungen hergestellt und verschiedene Eigenschaften der erhaltenen Massen untersucht.

Zunächst werden die beiden Komponenten A und B getrennt hergestellt, indem zuerst aus den jeweiligen aus den Tabellen 1 bis 5 ersichtlichen Bestandteilen der A- und B-Komponente homogene Mischungen hergestellt werden, wobei pastöse, fließfähige Komponenten erhalten werden. Die Aushärtung wird durch gutes Vermischen der beiden Komponenten A und B gestartet, wobei die Komponenten im Volumenverhältnis A:B = 3:1 gemischt wurden.

### Beispiele 1 und 2

Um die Anwendbarkeit der Initiatorsysteme auf kalthärtende Methacrylatester für chemische Reaktionsharzmörtel zu beurteilen, wurden die in Tabelle 1 aufgelisteten Reaktionsharz-Zusammensetzungen hergestellt, wobei bei Beispiel 1 Cu(0) und bei Beispiel 2 Cu₂O als Katalysator verwendet wurde, und die Reaktivität der Reaktionsharz-Zusammensetzung anhand der Gelzeit bei +25°C und der Exothermie bestimmt.

### Bestimmung der Gelzeit und der Exothermie

Die Bestimmung der Gelzeit der Zusammensetzungen erfolgt mit einer handelsüblichen Vorrichtung (GELNORM®-Gel Timer) bei einer Temperatur von 25°C. Hierzu werden alle Bestandteile gemischt. Dieses Gemisch wird bis zu einer Höhe von 4 cm unterhalb des Randes in ein Teströhrchen gefüllt, wobei das Teströhrchen bei einer Temperatur von 25°C gehalten wird. (DIN 16945, DIN EN ISO 9396). Ein Glasstab oder eine Spindel wird mit 10 Hüben pro Minuten in dem Harz auf und ab bewegt. Die Gelzeit entspricht dem Zeitpunkt, zu dem das Teströhrchen durch den oszillierenden Stab angehoben wird. Zusätzliche Tests haben gezeigt, dass der Grad der Aushärtung am Gelpunkt (gemessen durch dynamische Differenzkalometrie (DSC)) innerhalb der Messgenauigkeit konstant ist.

Die Wärmeentwicklung der Probe wird gegen die Zeit aufgetragen. Die Auswertung erfolgt gemäß DIN16945. Die Gelzeit ist die Zeit, bei der ein Temperaturanstieg um 10K erreicht wird, hier von 25°C nach 35°C.

Die Reaktivitätsmessung (Exothermie) erfolgt gemäß DIN 16945.

**Tabelle 1:**

| **Beispiel** ^{a)} | **1** | | **2** | |
|---|---|---|---|---|
| **A-Komponente** | | | | |
| Methacrylatharz | UMA-1 | 39,8 % | UMA-1 | 39,8 % |
| Katalysator | Cu | 0,49 % | Cu₂O | 0,49 % |
| Verdicker | TS-720 | 2,50 % | TS-720 | 2,50 % |
| Füllstoff | F32 | 38,5 % | F32 | 38,5 % |
| | W12 | 18,5 % | W12 | 18,5 % |

| **B-Komponente** | | | | |
|---|---|---|---|---|
| Methacrylatharz | UMA-1 | 38,6 % | UMA-1 | 38,6 % |
| Ligand | PMDETA | 0,93 % | PMDETA | 0,93 % |
| Initiator | BiBEE | 0,94 % | BiBEE | 0,94 % |
| Verdicker | TS-720 | 2,50 % | TS-720 | 2,50 % |
| Füllstoff | F32 | 38,5 % | F32 | 38,5 % |
| | W12 | 18,5 % | W12 | 18,5 % |

| **Reaktivität** | | | | |
|---|---|---|---|---|
| Gelzeit 25°C | 26 min | | keine Aushärtung ^{b)} | |
| Exothermie | 64 °C | | - | |

| | | | | |
|---|---|---|---|---|
| ^{a)} alle Angaben in Gew. % ^{b)} Messung nach 2,5 h abgebrochen | | | | |

### Beispiele 3 bis 12

Um den Einfluss eines Beschleunigers zu beurteilen, wurden die in Tabelle 2 aufgelisteten Reaktionsharz-Zusammensetzungen hergestellt, wobei bei den Beispielen 3 bis 7 Cu(0) als Katalysator und bei den Beispielen 8 bis 12 Cu₂O als Katalysator und jeweils Methylhydrochinon als Beschleuniger in unterschiedlichen Konzentrationen verwendet wurde, und die Reaktivität der Reaktionsharz-Zusammensetzung anhand der Gelzeit bei +25°C und der Exothermie gemäß obiger Beschreibung bestimmt.

Diese Beispiele zeigen, dass die Methylhydrochinonmenge einen wesentlichen Einfluss auf die Reaktivität hat und dass eine Polymerisation ohne MeHQ deutlich langsamer und schlechter (Exothermie deutlich niedriger) verläuft. Weiterhin ist ersichtlich, dass Cu(0) deutlich besser aktiviert wird als Cu₂O.

**Tabelle 2:**

| **Beispiel** ^{a)} | | **1,3-7** | | **Beispiel** | **2,8 - 12** | |
|---|---|---|---|---|---|---|
| | | | | | | |

| | **A-Komponente** | | | | | |
|---|---|---|---|---|---|---|
| | Methacrylatharz | UMA-1 | 39,8% | | UMA-1 | 39,8 % |
| | Co-Initiator | Cu | 0,49% | | Cu₂O | 0,49 % |
| | Beschleuniger | MeHQ | Variabel | | MeHQ | Variabel |
| | Verdicker | TS-720 | 2,50% | | TS-720 | 2,50 % |
| | Füllstoff | F32 | 38,5% | | F32 | 38,5 % |
| | | W12 | 18,5% | | W12 | 18,5% |

| | **B-Komponente** | | | | | |
|---|---|---|---|---|---|---|
| | Methacrylatharz | UMA-1 | 38,6% | | UMA-1 | 38,6 % |
| | Ligand | PMDETA | 0,93% | | PMDETA | 0,93 % |
| | Initiator | BiBEE | 0,94% | | BiBEE | 0,94 % |
| | Verdicker | TS-720 | 2,50% | | TS-720 | 2,50% |
| | Füllstoff | F32 | 38,5% | | F32 | 38,5 % |
| | | W12 | 18,5% | | W12 | 18,5% |
| | | | | | | |

| **Reaktivität** | | | | | | |
|---|---|---|---|---|---|---|
| **Beispiel** | | | | **Beispiel** | | |
| **1** | MeHQ / g UMA | 0 mmol | | **2** | 0 mmol | |
| | Gelzeit 25°C | 48 min | | | keine Härtung ^{b)} | |
| | Exothermie | 55 °C | | | | |
| **3** | MeHQ / g UMA | 0,01 mmol | | **8** | 0,01 mmol | |
| | Gelzeit 25°C | 16 min | | | 18,5 min | |
| | Exothermie | 65 °C | | | 85 °C | |
| **4** | MeHQ / g UMA | 0,015 mmol | | **9** | 0,015 mmol | |
| | Gelzeit 25°C | 12,6 min | | | 15,7 min | |
| | Exothermie | 77 °C | | | 90 °C | |
| **5** | MeHQ / g UMA | 0,02 mmol | | **10** | 0,02 mmol | |
| | Gelzeit 25°C | 9 min | | | 13,9 min | |
| | Exothermie | 88 °C | | | 88 °C | |
| **6** | MeHQ / g UMA | 0,04 mmol | | **11** | 0,04 mmol | |
| | Gelzeit 25°C | 4,6 min | | | 13,1 min | |
| | Exothermie | 88 °C | | | 87 °C | |
| **7** | MeHQ / g UMA | 0,06 mmol | | **12** | 0,06 mmol | |
| | Gelzeit 25°C | 3,8 min | | | 11,0 min | |
| | Exothermie | 86 °C | | | 87 °C | |

| | | | | | | |
|---|---|---|---|---|---|---|
| ^{a)} alle Angaben in Gew.-% ; ^{b)} Messung nach 2,5 Stunden abgebrochen | | | | | | |

### Beispiele 13 bis 16

Um die unterschiedliche Reaktivität der Cu(I)-Chalkogene zu beurteilen, wurden die in Tabelle 3 aufgelisteten Reaktionsharz-Zusammensetzungen hergestellt und die Reaktivität der Reaktionsharz-Zusammensetzung anhand der Gelzeit bei +25°C und der Exothermie gemäß obiger Beschreibung bestimmt.

Die Beispiele zeigen, dass alle verwendeten Cu(I)-Verbindungen als Katalysator wirken, mit der Reaktivitäts-Reihenfolge (bezogen auf die Gelzeit): Cu₂Te > Cu₂Se > Cu₂O > Cu₂S.

**Tabelle 3:**

| **Beispiel** ^{a)} | **13** | | **14** | | **15** | | **16** | |
|---|---|---|---|---|---|---|---|---|
| | | | | | | | | |

| A-Komponente | | | | | | | | |
|---|---|---|---|---|---|---|---|---|
| Methacrylatharz | UMA-1 | 38,3 % | UMA-1 | 38,8 % | UMA-1 | 38,9 % | UMA-1 | 38,8 % |
| Katalysator | Cu₂Te | 1,98 % | Cu₂Se | 0,81 % | Cu₂S | 0,57 % | Cu₂O | 0,56 % |
| Beschleuniger | MeHQ | 0,20 % | MeHQ | 0,20 % | MeHQ | 0,20 % | MeHQ | 0,20 % |
| Verdicker | TS-720 | 2,50 % | TS-720 | 2,53 % | TS-720 | 2,54 % | TS-720 | 2,54 % |
| Füllstoff | F32 | 38,5 % | F32 | 39,0 % | F32 | 39,1 % | F32 | 39,1 % |
| | W12 | 18,5 % | W12 | 18,7 % | W12 | 18,8% | W12 | 18,8 % |

| **B-Komponente** | | | | | | | | |
|---|---|---|---|---|---|---|---|---|
| Methacrylatharz | UMA-1 | 38,6 % | UMA-1 | 38,6 % | UMA-1 | 38,6 % | UMA-1 | 38,6 % |
| Ligand | PMDETA | 0,93 % | PMDETA | 0,93 % | PMDETA | 0,93 % | PMDETA | 0,93 % |
| In itiator | BiBEE | 0,94 % | BiBEE | 0,94 % | BiBEE | 0,94 % | BiBEE | 0,94 % |
| Verdicker | TS-720 | 2,5 % | TS-720 | 2,5 % | TS-720 | 2,5 % | TS-720 | 2,5 % |
| Füllstoff | F32 | 38,5 % | F32 | 38,5 % | F32 | 38,5 % | F32 | 38,5 % |
| | W12 | 18,5 % | W12 | 18,5 % | W12 | 18,5 % | W12 | 18,5 % |
| | | | | | | | | |

| **Reaktivität** | | | | | | | | |
|---|---|---|---|---|---|---|---|---|
| Gelzeit 25°C | 0,8 min | | 4,7 min | | 18,0 min | | 6,0 min | |
| Exothermie | 100 °C | | 90 °C | | 55 °C | | 95 °C | |

| | | | | | | | | |
|---|---|---|---|---|---|---|---|---|
| ^{a)} alle Angaben in Gew.-% | | | | | | | | |

### Beispiele 17 bis 19

Um die unterschiedliche Reaktivität von Kupferpulver mit unterschiedlich großer spezifischer Oberfläche zu beurteilen, wurden die in Tabelle 4 aufgelisteten Reaktionsharz-Zusammensetzungen hergestellt und die Reaktivität der Reaktionsharz-Zusammensetzung anhand der Gelzeit bei +25°C und der Exothermie gemäß obiger Beschreibung bestimmt.

Diese Beispiele zeigen, dass das Kupferpulver eine hinreichend große spezifische Oberfläche haben muss, um eine gute Reaktivität zu erhalten - das Kupferpulver "Cu 400µ", welches relativ grob, sandartig vorliegt, führt zu einer eher schwachen Exothermie nach sehr langer Zeit, was auf eine nur ungenügende Initiierung hinweist.

**Tabelle 4:**

| **Beispiel** ^{a)} | **17** | | **18** | | **19** | |
|---|---|---|---|---|---|---|
| | | | | | | |

| **A-Komponente** | | | | | | |
|---|---|---|---|---|---|---|
| Methacrylatharz | UMA-1 | 39,9 % | UMA-1 | 39,9 % | UMA-1 | 39,9 % |
| Katalysator | Cu < 10µ | 0,49 % | Cu < 75µ | 0,49 % | Cu 400µ | 0,49 % |
| Beschleuniger | MeHQ | 0,20 % | MeHQ | 0,20 % | MeHQ | 0,20 % |
| Verdicker | TS-720 | 2,50 % | TS-720 | 2,50 % | TS-720 | 2,50 % |
| Füllstoff | F32 | 38,5 % | F32 | 38,5 % | F32 | 38,5 % |
| | W12 | 18,5 % | W12 | 18,5 % | W12 | 18,5 % |

| **B-Komponente** | | | | | | |
|---|---|---|---|---|---|---|
| Methacrylatharz | UMA-1 | 38,6 % | UMA-1 | 38,6 % | UMA-1 | 38,6 % |
| Ligand | PMDETA | 0,93 % | PMDETA | 0,93 % | PMDETA | 0,93 % |
| Initiator | BiBEE | 0,94 % | BiBEE | 0,94 % | BiBEE | 0,94 % |
| Verdicker | TS-720 | 2,51 % | TS-720 | 2,51 % | TS-720 | 2,51 % |
| Füllstoff | F32 | 38,5 % | F32 | 38,5 % | F32 | 38,5 % |
| | W12 | 18,5 % | W12 | 18,5 % | W12 | 18,5 % |
| | | | | | | |

| **Reaktivität** | | | | | | |
|---|---|---|---|---|---|---|
| Gelzeit 25°C | 6,3 min | | 3,5 min | | 45 min | |
| Exothermie | 76 °C | | 88 °C | | 27 °C | |

| | | | | | | |
|---|---|---|---|---|---|---|
| ^{a)} alle Angaben in Gew.-% | | | | | | |

### Beispiele 20 bis 24

Um die unterschiedliche Reaktivität von verschiedenen Stickstoff-enthaltenden Liganden zu beurteilen, wurden die in Tabelle 5 aufgelisteten Reaktionsharz-Zusammensetzungen hergestellt und die Reaktivität der Reaktionsharz-Zusammensetzung anhand der Gelzeit bei +25°C und der Exothermie gemäß obiger Beschreibung bestimmt.

Diese Beispiele zeigen, dass prinzipiell verschiedene Stickstoff-enthaltende Liganden geeignet sind. Es ergibt sich bei gleichen molaren Mengen eine Reaktivitätsreihenfolge: TDMAEA > HMTETA > PMDETA > bipy > TMEDA.

**Tabelle 5:**

| **Beispiel** ^{a)} | **20** | | **21** | | **22** | | **23** | | **24** | |
|---|---|---|---|---|---|---|---|---|---|---|
| | | | | | | | | | | |

| A-Komponente | | | | | | | | | | |
|---|---|---|---|---|---|---|---|---|---|---|
| Methacrylatharz | UMA-1 | 38,8 % | UMA-1 | 39,8 % | UMA-1 | 39,8% | UMA-1 | 39,8% | UMA-1 | 39,8% |
| Co-Initiator | Cu₂O | 0,56 % | Cu₂O | 0,49 % | Cu₂O | 0,49 % | Cu₂O | 0,49 % | Cu₂O | 0,49 % |
| Beschleuniger | MeHQ | 0,20 % | MeHQ | 0,20 % | MeHQ | 0,20% | MeHQ | 0,20 % | MeHQ | 0,20 % |
| Verdicker | TS-720 | 2,54 % | TS-720 | 2,50 % | TS-720 | 2,50 % | TS-720 | 2,50 % | TS-720 | 2,50 % |
| Füllstoff | F32 | 39,1 % | F32 | 38,5% | F32 | 38,5% | F32 | 38,5% | F32 | 38,5 % |
| | W12 | 18,8% | W12 | 18,5% | W12 | 18,5% | W12 | 18,5% | W12 | 18,5% |

| **B-Komponente** | | | | | | | | | | |
|---|---|---|---|---|---|---|---|---|---|---|
| Methacrylatharz | UMA-1 | 38,6 % | UMA-1 | 38,7 % | UMA-1 | 38,8% | UMA-1 | 38,5 % | UMA-1 | 38,5 % |
| Ligand | PMDETA | 0,93 % | Bipy | 0,84 % | TMEDA | 0,62% | HMTETA | 1,23 % | TDMAEA | 1,23 % |
| In itiator | BiBEE | 0,94 % | BiBEE | 0,94 % | BiBEE | 0,94% | BiBEE | 0,93 % | BiBEE | 0,93 % |
| Verdicker | TS-720 | 2,5 % | TS-720 | 2,51 % | TS-720 | 2,52 % | TS-720 | 2,50 % | TS-720 | 2,50 % |
| Füllstoff | F32 | 38,5 % | F32 | 38,5 % | F32 | 38,6% | F32 | 38,4 % | F32 | 38,4 % |
| | W12 | 18,5% | W12 | 18,5% | W12 | 18,5% | W12 | 18,4 % | W12 | 18,5% |
| | | | | | | | | | | |

| **Reaktivität** | | | | | | | | | | |
|---|---|---|---|---|---|---|---|---|---|---|
| Gelzeit 25°C | 6,0 min | | 15,5 min | | 15,1 min | | 4,2 min | | 3,4 min | |
| Exothermie | 95 °C | | 45 °C | | 32 °C | | 88 °C | | 93 °C | |

| | | | | | | | | | | |
|---|---|---|---|---|---|---|---|---|---|---|
| ^{a)} alle Angaben in Gew.-% | | | | | | | | | | |

### Beispiele 25 und 26

Um den Einfluss des Stickstoff-enthaltenden Liganden zu beurteilen, wurden die in Tabelle 6 aufgelisteten Reaktionsharz-Zusammensetzungen hergestellt und die Reaktivität der Reaktionsharz-Zusammensetzung anhand der Gelzeit bei +25°C und der Exothermie gemäß obiger Beschreibung bestimmt. Aus Tabelle 6 wird deutlich, dass ein Stickstoff-enthaltender Ligand unbedingt erforderlich ist, damit die Zusammensetzung aushärtet.

**Tabelle 6:**

| **Beispiel** ^{a)} | **25** | | **26** | |
|---|---|---|---|---|
| **A-Komponente** | | | | |
| Methacrylatharz | UMA-1 | 39,8 % | UMA-1 | 39,8 % |
| Co-Initiator | Cu | 0,49 % | Cu₂O | 0,49 % |
| Beschleuniger | MeHQ | 0,06 mmol | MeHQ | 0,06 mmol |
| Inhibitor | | | | |
| Verdicker | TS-720 | 2,50 % | TS-720 | 2,50 % |
| Füllstoff | F32 | 38,5 % | F32 | 38,5 % |
| | W12 | 18,5 % | W12 | 18,5 % |
| **B-Komponente** | | | | |
| Methacrylatharz | UMA-1 | 38,6 % | UMA-1 | 38,6 % |
| Ligand | PMDETA | variabel | PMDETA | variabel |
| Initiator | BiBEE | 0,94 % | BiBEE | 0,94 % |
| Verdicker | TS-720 | 2,50 % | TS-720 | 2,50 % |
| Füllstoff | F32 | 38,5 % | F32 | 38,5 % |
| | W12 | 18,5 % | W12 | 18,5 % |

| **Reaktivität** | | | | |
|---|---|---|---|---|
| 0% PMDETA | 0 mmol | | 0 mmol | |
| Gelzeit 25°C | keine Härtung ^{b)} | | keine Härtung ^{b} | |
| Exothermie | - | | - | |
| 0,93% PMDETA | 0,01 mmol | | 0,01 mmol | |
| Gelzeit 25°C | 10,2 min | | 10,0 min | |
| Exothermie | 83°C | | 85°C | |

| | | | | |
|---|---|---|---|---|
| ^{a)} alle Angaben in Gew.-% ^{b)} Messung nach 3 Stunden abgebrochen | | | | |

### Beispiele 27 bis 31

Um die unterschiedliche Reaktivität von verschiedenen Stickstoff-enthaltenden Liganden zu beurteilen, wurden die in Tabelle 7 aufgelisteten Reaktionsharz-Zusammensetzungen hergestellt und die Reaktivität der Reaktionsharz-Zusammensetzung anhand der Gelzeit bei +25°C und der Exothermie gemäß obiger Beschreibung bestimmt.

Diese Beispiele zeigen, dass durch Variation der Konzentrationen des Initiatorsystems die Reaktivität eingestellt werden kann. Ferner zeigen die Beispiele, dass sich die Gelzeit über einen Polymerisationsinhibitor einstellen lässt.

Ferner wurde anhand dieser Beispiele gezeigt, dass die erfindungsgemäßen Reaktionsharz-Zusammensetzungen als Bindemittel für Reaktionsharzmörtel für die chemische Befestigung geeignet sind.

### Bestimmung der Auszuasfestigkeit

Jeweils 3 Ankerstangen M12x72, werden in Beton C20/25 in trockene und gereinigte Bohrlöcher mit 14 mm Durchmesser gesetzt und nach 24 h Aushärtung bis zum Versagen ausgezogen (zentrischer Zug) und die folgenden Versagenslasten bei den in der Tabelle 7 angegebenen Prüftemperaturen bestimmt (Mittelwerte von 3 Messungen).

Anhand der Beispiele 27 bis 31 wird ersichtlich, dass mit den anorganisch gefüllten Reaktionsharz-Zusammensetzungen eine Polymerisation von Methacrylaten bei Raumtemperatur erreicht wird, welche mit einem Inhibitor verzögert werden kann und auch noch nach einer langen Offenzeit (Gelzeit ca. 20 Minuten) eine gute Polymerisation (Peaktemperatur ca. 90°C) ergibt sowie zu guten mechanischen Eigenschaften bei Raumtemperatur und bei erhöhten Temperaturen führt. Dies deutet darauf hin, dass es möglich ist, bei den erfindungsgemäßen Reaktionsharz-Zusammensetzungen die Gelzeit gezielt einzustellen und auf die jeweiligen Anwendungsbedürfnisse anzupassen.

**Tabelle 7:**

| **Beispiel** ^{a)} | **27** | | **28** | | **29** | | **30** | | **31** | |
|---|---|---|---|---|---|---|---|---|---|---|
| | | | | | | | | | | |

| A-Komponente | | | | | | | | | | |
|---|---|---|---|---|---|---|---|---|---|---|
| Methacrylatharz | UMA-1 | 39,8 % | UMA-1 | 39,8 % | UMA-1 | 39,8 % | UMA-1 | 39,8 % | UMA-1 | 39,8 % |
| Co-Initiator | Cu-pulver | 0,49 % | Cu-pulver | 0,49 % | Cu-pulver | 0,49 % | Cu₂O | 0,49 % | Cu₂O | 0,49 % |
| Beschleuniger | MeHQ | 0,20 % | MeHQ | 0,30 % | MeHQ | 0,30 % | MeHQ | 0,30 % | MeHQ | 0,30 % |
| Inhibitor | | | Tempol | 0,042 % | Tempol | 0,010% | | | Tempol | 0,01 % |
| Verdicker | TS-720 | 2,50 % | TS-720 | 2,5 % | TS-720 | 2,5 % | TS-720 | 2,5 % | TS-720 | 2,50 % |
| Füllstoff | F32 | 38,5 % | F32 | 38,5 % | F32 | 38,5 % | F32 | 38,4 % | F32 | 38,4 % |
| | W12 | 18,5 % | W12 | 18,5 % | W12 | 18,5 % | W12 | 18,5% | W12 | 18,5% |

| **B-Komponente** | | | | | | | | | | |
|---|---|---|---|---|---|---|---|---|---|---|
| Methacrylatharz | UMA-1 | 38,6 % | UMA-1 | 38,6 % | UMA-1 | 38,6 % | UMA-1 | 38,6 % | UMA-1 | 38,6 % |
| Ligand | PMDETA | 0,93 % | PMDETA | 0,93 % | PMDETA | 0,93 % | PMDETA | 0,93 % | PMDETA | 0,93 % |
| In itiator | BiBEE | 0,94 % | BiBEE | 0,94 % | BiBEE | 0,94 % | BiBEE | 0,94 % | BiBEE | 0,94 % |
| Verdicker | TS-720 | 2,5 % | TS-720 | 2,5 % | TS-720 | 2,5 % | TS-720 | 2,5 % | TS-720 | 2,5 % |
| Füllstoff | F32 | 38,5 % | F32 | 38,5 % | F32 | 38,5 % | F32 | 38,5 % | F32 | 38,5 % |
| | W12 | 18,5 % | W12 | 18,5 % | W12 | 18,5 % | W12 | 18,5 % | W12 | 18,5 % |
| | | | | | | | | | | |

| **Reaktivität** | | | | | | | | | | |
|---|---|---|---|---|---|---|---|---|---|---|
| Gelzeit 25°C | 1,5 min | | 12,4 min | | 8,4min | | 10,1 min | | 19,5 min | |
| Exothermie | 90°C | | 90 °C | | 90 °C | | 86°C | | 89 °C | |
| | | | | | | | | | | |

| **Versagenslasten** | | | | | | | | | | |
|---|---|---|---|---|---|---|---|---|---|---|
| -5°C | 1,7 N/mm² | | 11,6 N/mm² | | 7,0 N/mm² | | Keine Aushärtung | | Nicht ausgehärtet | |
| +5°C | 3,4 N/mm² | | 13,0 N/mm² | | 8,1 N/mm² | | 5,9 N/mm² | | 6,0 N/mm² | |
| +20°C | 7,0 N/mm² | | 14,2 N/mm² | | 10,1 N/mm² | | 9,4 N/mm² | | 8,0 N/mm² | |
| +40°C | 12,8 N/mm² | | 16,8 N/mm² | | 14,5 N/mm² | | 15,4 N/mm² | | 15,5 N/mm² | |

| | | | | | | | | | | |
|---|---|---|---|---|---|---|---|---|---|---|
| ^{a)} alle Angaben in Gew.-% | | | | | | | | | | |

## Patentansprüche

1. Reaktionsharz-Zusammensetzung mit einem Harzbestandteil, der eine radikalisch polymerisierbare Verbindung enthält, und einem Initiatorsystem, das einen α-Halogencarbonsäureester und ein Katalysatorsystem enthält, wobei das Katalysatorsystem wenigstens einen Stickstoff-enthaltenden Liganden und Cu(0) oder eine anorganische Cu(I)-Verbindung umfasst, wobei die anorganische Cu(I)-Verbindung eine Cu(I)-Verbindung mit Elementen der 6. Hauptgruppe ist.

2. Reaktionsharz-Zusammensetzung nach Anspruch 1, wobei die anorganische Cu(I)-Verbindung aus der Gruppe ausgewählt ist, bestehend aus Cu₂O, Cu₂S, Cu₂Se und Cu₂Te.

3. Reaktionsharz-Zusammensetzung nach Anspruch 1 oder 2, wobei der α-Halogencarbonsäureester unter Verbindungen der allgemeinen Formel (I) ausgewählt ist: 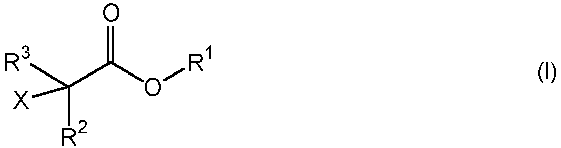 in der
X Chlor, Brom oder Iod, bevorzugt Chlor oder Brom, besonders bevorzugt Brom bedeutet;
R¹ für eine geradkettige oder verzweigte, gegebenenfalls substituierte C₁-C₂₀-Alkylgruppe oder eine Arylgruppe steht; oder für den Rest eines acylierten, verzweigten, dreiwertigen Alkohols, den Rest eines vollständig oder partiell acylierten, linearen oder verzweigten, vierwertigen Alkohols, den Rest eines vollständig oder partiell acylierten, linearen fünf-oder sechswertigen Alkohols, den Rest einer vollständig oder partiell acylierten, linearen oder cyclischen C₄-C₆-Aldose oder C₄-C₆-Ketose oder den Rest eines vollständig oder partiell acylierten Disaccharids steht, und Isomere dieser Verbindungen;
R² und R³ unabhängig voneinander für Wasserstoff, eine C₁-C₂₀-Alkylgruppe, eine C₃-C₈-Cycloalkylgruppe, C₂-C₂₀-Alkenyl-oder -Alkinylgruppe, Oxiranylgruppe, Glycidylgruppe, Arylgruppe, Heterocyclylgruppe, Aralkylgruppe oder Aralkenylgruppe stehen.

4. Reaktionsharz-Zusammensetzung nach Anspruch 3, wobei der α-Halogencarbonsäureester ein C₁-C₆-Alkylester einer α-Halo-C₁-C₆-Carbonsäure ist.

5. Reaktionsharz-Zusammensetzung nach Anspruch 4, wobei die α-Halo-C₁-C₆-Carbonsäure eine α-Brom-C₁-C₆-Carbonsäure ist.

6. Reaktionsharz-Zusammensetzung nach einem der vorhergehenden Ansprüche, wobei der Stickstoff-enthaltende Ligand zwei oder mehr Stickstoffatome enthält und mit Kupfer(I) einen Chelatkomplex bilden kann.

7. Reaktionsharz-Zusammensetzung nach Anspruch 6, wobei der Stickstoff-enthaltende Ligand unter Aminoverbindungen mit mindestens zwei primären, sekundären und/oder tertiären Aminogruppen oder Aminoverbindungen mit mindestens zwei heterocyclischen Stickstoffatomen ausgewählt ist.

8. Reaktionsharz-Zusammensetzung nach Anspruch 6 oder 7, wobei der Stickstoff-enthaltende Ligand im Überschuss vorhanden ist.

9. Reaktionsharz-Zusammensetzung nach einem der vorhergehenden Ansprüche, wobei das Initiatorsystem ferner einen Beschleuniger enthält.

10. Reaktionsharz-Zusammensetzung nach Anspruch 9, wobei der Beschleuniger Phenol oder ein Phenolderivat ist.

11. Reaktionsharz-Zusammensetzung nach einem der vorhergehenden Ansprüche, wobei die radikalisch polymerisierbare Verbindung ein ungesättigtes Polyesterharz, ein Vinylesterharz und/oder ein Vinylester-Urethanharz ist.

12. Reaktionsharz-Zusammensetzung nach einem der vorhergehenden Ansprüche, wobei die radikalisch polymerisierbare Verbindung ein (Meth)acrylat-funktionalisiertes Harz ist und der α-Halogencarbonsäureester ein α-Halogencarbonsäureester der Isobutansäure oder Propansäure ist.

13. Reaktionsharz-Zusammensetzung nach einem der vorhergehenden Ansprüche, wobei die Zusammensetzung ferner einen nicht-phenolischen Inhibitor enthält.

14. Reaktionsharz-Zusammensetzung nach Anspruch 13, wobei der nicht-phenolische Inhibitor ein stabiles *N*-Oxyl-Radikal ist.

15. Reaktionsharz-Zusammensetzung nach einem der vorhergehenden Ansprüche, wobei der Harzbestandteil ferner mindestens einen Reaktivverdünner umfasst.

16. Reaktionsharz-Zusammensetzung nach einem der vorhergehenden Ansprüche, wobei die Zusammensetzung ferner anorganische Zuschlagstoffe enthält.

17. Reaktionsharz-Zusammensetzung nach Anspruch 16, wobei der anorganische Zuschlagstoff ein Additiv und/oder ein Füllstoff ist.

18. Zwei- oder Mehrkomponenten-System umfassend eine Reaktionsharz-Zusammensetzung nach einem der Ansprüche 1 bis 17, wobei der Stickstoff-enthaltende Ligand und das Cu(0) oder die anorganische Cu(I)-Verbindung reaktionsinhibierend getrennt voneinander gelagert sind.

19. Zweikomponenten-System nach Anspruch 18, wobei in einer ersten Komponente das Cu(0) oder die anorganische Cu(I)-Verbindung und gegebenenfalls der Beschleuniger und in einer zweiten Komponente der Stickstoff-enthaltende Ligand und der Initiator enthalten sind, die radikalisch polymerisierbare Verbindung und gegebenenfalls der Inhibitor auf die beiden Komponenten verteilt sind, wobei die beiden Komponenten reaktionsinhibierend getrennt voneinander sind.

20. Zweikomponenten-System nach Anspruch 19, wobei die Reaktionsharz-Zusammensetzung ferner mindestens einen Reaktivverdünner und/oder anorganischen Zuschlagstoffe, die in einer oder in beiden Komponenten enthalten sind, umfasst.

21. Verwendung einer Reaktionsharz-Zusammensetzung nach einem der Ansprüche 1 bis 17 oder eines Zwei- oder Mehrkomponenten-Systems nach Anspruch 19 oder 20 für bauliche Zwecke.

## Claims

1. Reaction resin composition having a resin component that contains a radically polymerizable compound and having an initiator system that contains an α-halocarboxylic acid ester and a catalyst system, wherein the catalyst system comprises at least one nitrogen-containing ligand and Cu(0) or an inorganic Cu(I) compound, wherein the inorganic Cu(I) compound is a Cu(I) compound with elements of the 6th main group.

2. Reaction resin composition according to claim 1, wherein the inorganic Cu(I) compound is selected from the group consisting of CU₂0, CU₂S, Cu₂Se and Cu₂Te.

3. Reaction resin composition according to either claim 1 or claim 2, wherein the α-halocarboxylic acid ester is selected from compounds of general formula (I): 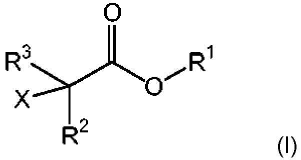 in which
X denotes chlorine, bromine or iodine, preferably chlorine or bromine, particularly preferably bromine;
R¹ represents a straight-chain or branched, optionally substituted C₁-C₂₀ alkyl group or an aryl group; or
the group of an acylated, branched, trihydric alcohol, the group of a fully or partially acylated, linear or branched, tetrahydric alcohol, the group of a fully or partially acylated, linear pentahydric or hexahydric alcohol, the group of a fully or partially acylated, linear or cyclic C₄-C₆ aldose or C₄-C₆ ketose or the group of a fully or partially acylated disaccharide, and isomers of these compounds;
R² and R³ represent, independently of one another, hydrogen, a C₁-C₂₀ alkyl group, a C₃-C₈ cycloalkyl group, C₂-C₂₀ alkenyl or alkynyl group, oxiranyl group, glycidyl group, aryl group, heterocyclyl group, aralkyl group or aralkenyl group.

4. Reaction resin composition according to claim 3, wherein the α-halocarboxylic acid ester is a C₁-C₆ alkyl ester of an α-halo-C₁-C₆ carboxylic acid.

5. Reaction resin composition according to claim 4, wherein the α-halo-C₁-C₆ carboxylic acid is an α-bromo-C₁-C₆ carboxylic acid.

6. Reaction resin composition according to any of the preceding claims, wherein the nitrogen-containing ligand contains two or more nitrogen atoms and can form a chelate complex with copper(I).

7. Reaction resin composition according to claim 6, wherein the nitrogen-containing ligand is selected from amino compounds having at least two primary, secondary and/or tertiary amino groups or amino compounds having at least two heterocyclic nitrogen atoms.

8. Reaction resin composition according to either claim 6 or claim 7, wherein the nitrogen-containing ligand is present in excess.

9. Reaction resin composition according to any of the preceding claims, wherein the initiator system further contains an accelerator.

10. Reaction resin composition according to claim 9, wherein the accelerator is phenol or a phenol derivative.

11. Reaction resin composition according to any of the preceding claims, wherein the radically polymerizable compound is an unsaturated polyester resin, a vinyl ester resin and/or a vinyl ester urethane resin.

12. Reaction resin composition according to any of the preceding claims, wherein the radically polymerizable compound is a (meth)acrylate-functionalized resin and the α-halocarboxylic acid ester is an α-halocarboxylic acid ester of isobutanoic acid or propanoic acid.

13. Reaction resin composition according to any of the preceding claims, wherein the composition further contains a non-phenolic inhibitor.

14. Reaction resin composition according to claim 13, wherein the non-phenolic inhibitor is a stable *N*-oxyl radical.

15. Reaction resin composition according to any of the preceding claims, wherein the resin component further comprises at least one reactive diluent.

16. Reaction resin composition according to any of the preceding claims, wherein the composition further contains inorganic aggregates.

17. Reaction resin composition according to claim 16, wherein the inorganic aggregate is an additive and/or a filler.

18. Two- or multi-component system comprising a reaction resin composition according to any of claims 1 to 17, wherein the nitrogen-containing ligand and the Cu(0) or the inorganic Cu(I) compound are stored separately from one another in a reaction-inhibiting manner.

19. Two-component system according to claim 18, wherein a first component contains the Cu(0) or the inorganic Cu(I) compound and optionally the accelerator and a second component contains the nitrogen-containing ligand and the initiator, and the radically polymerizable compound and optionally the inhibitor are distributed over the two components, wherein the two components are separated from one another in a reaction-inhibiting manner.

20. Two-component system according to claim 19, wherein the reaction resin composition further comprises at least one reactive diluent and/or inorganic aggregates which are contained in one or in both components.

21. Use of a reaction resin composition according to any of claims 1 to 17 or of a two- or multi-component system according to either claim 19 or claim 20 for construction purposes.

## Revendications

1. Composition de résine de réaction comportant un composant de résine qui contient un composé polymérisable par voie radicalaire et un système initiateur qui contient un ester d'acide α-halo-carboxylique et un système de catalyseur, le système de catalyseur comprenant au moins un ligand contenant de l'azote et Cu(0) ou un composé inorganique Cu(I), le composé inorganique Cu(I) étant un composé Cu(I) comportant des éléments du 6^{ème} groupe principal.

2. Composition de résine de réaction selon la revendication 1, dans laquelle le composé inorganique Cu(I) est choisi dans le groupe constitué par Cu₂O, Cu₂S, Cu₂Se et Cu₂Te.

3. Composition de résine de réaction selon la revendication 1 ou 2, dans laquelle l'ester d'acide α-halo-carboxylique est choisi parmi les composés de formule générale (I) : 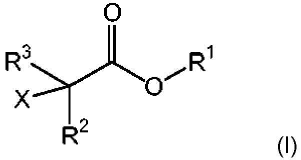 dans laquelle
X représente le chlore, le brome ou l'iode, de préférence le chlore ou le brome, de manière particulièrement préférée le brome ;
R¹ représente un groupe alkyle en C₁-C₂₀ linéaire ou ramifié éventuellement substitué ou un groupe aryle ; ou
représente le reste d'un alcool trivalent acylé ramifié, le reste d'un alcool tétravalent entièrement ou partiellement acylé, linéaire ou ramifié, le reste d'un alcool pentavalent ou hexavalent entièrement ou partiellement acylé linéaire, le reste d'un aldose en C₄-C₆ ou d'un cétose en C₄-C₆ entièrement ou partiellement acylé, linéaire ou cyclique, ou le reste d'un disaccharide entièrement ou partiellement acylé, et les isomères de ces composés ;
R² et R³ représentent indépendamment l'un de l'autre l'hydrogène, un groupe alkyle en C₁-C₂₀, un groupe cycloalkyle en C₃-C₈, un groupe alcényle ou alcynyle en C₂-C₂₀, un groupe oxyranyle, un groupe glycidyle, un groupe aryle, un groupe hétérocyclyle, un groupe aralkyle ou un groupe aralcényle.

4. Composition de résine de réaction selon la revendication 3, dans laquelle l'ester d'acide α-halo-carboxylique est un ester d'alkyle en C₁-C₆ d'un acide α-halo-C₁-C₆-carboxylique.

5. Composition de résine de réaction selon la revendication 4, dans laquelle l'acide α-halo-C₁-C₆-carboxylique est un acide α-bromo-C₁-C₆-carboxylique.

6. Composition de résine de réaction selon l'une des revendications précédentes, dans laquelle le ligand contenant de l'azote contient au moins deux atomes d'azote et peut former un complexe chélate avec le cuivre(I).

7. Composition de résine de réaction selon la revendication 6, dans laquelle le ligand contenant de l'azote est choisi parmi des composés amino comportant au moins deux groupes amino primaires, secondaires et/ou tertiaires ou des composés amino comportant au moins deux atomes d'azote hétérocycliques.

8. Composition de résine de réaction selon la revendication 6 ou 7, dans laquelle le ligand contenant de l'azote est présent en excès.

9. Composition de résine de réaction selon l'une des revendications précédentes, dans laquelle le système initiateur contient en outre un accélérateur.

10. Composition de résine de réaction selon la revendication 9, dans laquelle l'accélérateur est du phénol ou un dérivé de phénol.

11. Composition de résine de réaction selon l'une des revendications précédentes, dans laquelle le composé polymérisable par voie radicalaire est une résine polyester insaturée, une résine vinylester et/ou une résine vinylester uréthane.

12. Composition de résine de réaction selon l'une des revendications précédentes, dans laquelle le composé polymérisable par voie radicalaire est une résine (méth)acrylate fonctionnalisée et l'ester d'acide α-halo-carboxylique est un ester d'acide α-halo-carboxylique d'acide isobutanoïque ou d'acide propanoïque.

13. Composition de résine de réaction selon l'une des revendications précédentes, dans laquelle la composition comprend en outre un inhibiteur non phénolique.

14. Composition de résine de réaction selon la revendication 13, dans laquelle l'inhibiteur non phénolique est un radical *N*-oxyle stable.

15. Composition de résine de réaction selon l'une des revendications précédentes, dans laquelle le composant de résine comprend en outre au moins un diluant réactif.

16. Composition de résine de réaction selon l'une des revendications précédentes, dans laquelle la composition contient en outre des agrégats inorganiques.

17. Composition de résine de réaction selon la revendication 16, dans laquelle l'agrégat inorganique est un additif et/ou une charge.

18. Système à au moins deux constituants comprenant une composition de résine de réaction selon l'une des revendications 1 à 17, dans lequel le ligand contenant de l'azote et le Cu(0) ou le composé inorganique Cu(I) sont stockés séparément l'un de l'autre de façon à inhiber une réaction.

19. Système à deux composants selon la revendication 18, dans lequel un premier constituant contient le Cu(0) ou le composé inorganique Cu(I) et éventuellement l'accélérateur et un second constituant contient le ligand contenant de l'azote et l'initiateur, le composé polymérisable par voie radicalaire et éventuellement l'inhibiteur étant répartis parmi les deux constituants, les deux constituants étant séparés l'un de l'autre de façon à inhiber une réaction.

20. Système à deux constituants selon la revendication 19, dans lequel la composition de résine de réaction comprend en outre au moins un diluant réactif et/ou des agrégats inorganiques qui sont contenus dans un ou dans les deux constituants.

21. Utilisation d'une composition de résine de réaction selon l'une des revendications 1 à 17 ou d'un système à au moins deux constituants selon la revendication 19 ou 20 à des fins structurelles.
